# EUROPEAN PATENT SPECIFICATION

(11) **EP 3 894 214 B1**
(45) Date of publication and mention of the grant of the patent: **01.04.2026**
(21) Application number: 19823782.8
(22) Date of filing: 11.12.2019
(51) Int. Cl.: B32B 7/12, B32B 27/08, B32B 27/10, B32B 27/20, B32B 27/32, B32B 29/00, B32B 29/08, D21H 19/22, B65D 65/40, B65D 65/38, D21H 19/20, D21H 19/38, D21H 19/82, D21H 27/10

(54) **A PAPERBOARD STRUCTURE, A PACKAGE AND USE OF THE PACKAGE**
KARTONSTRUKTUR, VERPACKUNG UND VERWENDUNG DER VERPACKUNG
STRUCTURE EN CARTON, EMBALLAGE ET UTILISATION DE L'EMBALLAGE

(30) Priority: 11.12.2018 FI 20186067
(43) Date of publication of application: 20.10.2021
(73) Proprietor: Metsä Board Oyj, 02020 Metsä (FI)
(72) Inventor: VERKASALO, Lauri, 02020 METSÄ (FI)
(74) Representative: Laine IP Oy
(86) International application number: PCT/FI2019/050881
(87) International publication number: WO 2020/120838

(56) References cited:
- WO-A1-2019/239334
- WO-A2-2004/048078
- WO-A2-2008/003025
- US-A1- 2003 166 368
- US-A1- 2004 028 850
- US-A1- 2014 272 163
- US-A1- 2015 151 520

## Description

### FIELD

The present invention relates to coated paperboards, and more particularly to barrier coatings containing fillers.

### BACKGROUND

### Background

Barriers are used in paper and paperboard products to prevent unwanted substances to penetrate through the material. Such unwanted substances can be for example: water, water vapour, oxygen, fat, flavourings and components of mineral oil. Plastic materials are typically used as the material of the barrier layer, blended with various additives and fillers.

In paperboards, barriers that are extruded or applied as dispersions are generally used. The barrier is applied either onto the back side or the surface of the paperboard. Barrier application is usually carried out as an off-line operation, where the paperboard manufactured at the paperboard mill is lengthwise cut into suitable rolls, packed, transported to the processing plant, coated with a barrier at the processing plant, packed and sent to the customer.

In the food packaging industry, it is imperative that the components of the barrier layer or any coating layers on top of the paperboard substrate shall not migrate to the surface of the coated paperboard and contact the food or liquid contents of the packaging. Such migration problems may aggravate particularly in the case of acidic contents, because such materials tend to react with and dissolve the coating.

In the EU, the safety of so-called Food Contact Materials (FCMs) is evaluated and tested extensively, in accordance with the plastic FCM Regulation (EU) No 10/2011. Food contact materials are either intended to be brought into contact with food, are already in contact with food, or can reasonably be brought into contact with food or transfer their constituents to the food under normal or foreseeable use. FCMs should be sufficiently inert so that their constituents neither adversely affect consumer health nor influence the quality of the food. To ensure the safety of FCMs, and to facilitate the free movement of goods, EU law provides for binding rules that business operators must comply with.

One of the most commonly used fillers in coated paperboards is calcium carbonate. It is inexpensive and, in most application areas, it can be used at high loadings. However, it is easily dissolved when contacted by acidic materials and therefore its use in food and liquid packaging has been very limited.

WO 2017/091391 A1 describes coatings for paperboard which include polyethylene outer layers and a polyethylene middle layer with calcium carbonate filler.

WO 2004/048078 A2 discloses a process of limiting scalping of essential oils from a paperboard container having an interior food contact layer of a polyolefin comprising the steps of: supplying a substrate selected from the group consisting of paper, paperboard, fiberboard, and bleached kraft paper having a first side and a second side opposite the first side; and, coating a product-contacting surface of said substrate with a layer of a polyolefin mixed with an effective amount of an inorganic additive.

US 2014/0272163 A1 discloses a composite structure including at least one or more fiber-containing layers, such as fiberboard or other layers having fibers from natural and/or synthetic sources, and one or more mineral-containing layers. The mineral-containing layer(s) comprises a thermoplastic bonding agent fixing the mineral particles in place. The fiber-containing layer(s) and mineral-containing layer(s) can be shaped, sized, and manufactured such that the composite structure formed therefrom is capable of being machined to form the storage article.

There is a need for providing improved paperboard structures that are capable of incorporating a wider selection of filler materials and which can be safely used in food and liquid packages.

The embodiments of the present invention are intended to overcome at least some of the above discussed disadvantages and restrictions of the previously known coatings.

### SUMMARY OF THE INVENTION

The invention is defined by the features of the independent claims. Some specific embodiments are defined in the dependent claims.

According to a first aspect of the present invention, there is provided a paperboard structure, comprising: a support layer comprising paperboard; a filler layer on top of and in direct contact with the support layer, the filler layer comprising an inorganic filler and a polyolefin; and a plastic coating layer on top of the filler layer and forming the outermost layer of the paperboard structure, the plastic coating layer comprising a polyolefin.

Various embodiments of the first aspect may comprise at least one feature from the following bulleted list:
- The inorganic filler is in the form of particles, such as microparticles or nanoparticles.
- The inorganic filler is in the form of particles having an average particle size of 0.01 to 3 µm, for example 0.5 to 2 µm.
- The inorganic filler is an acid-sensitive inorganic filler, preferably a carbonate-containing filler, for example CaCO₃.
- The polyolefin comprises polyethylene.
- The plastic coating layer consists of polyethylene.
- The thickness of the filler layer is 5 to 100 µm, preferably 5 to 50 µm.
- The thickness of the plastic coating layer is 5 to 50 µm, preferably 10 to 30 µm.
- The combined dosage produced by the filler layer and the plastic coating layer is 12 to 40 g per m² of the support layer, preferably 12 to 30 g per m² of the support layer.
- The amount of inorganic filler in the filler layer is at least 20 wt-%.
- The paperboard structure is obtained by an extrusion coating method.

According to a second aspect of the present invention, there is provided a package comprising the paperboard structure according to the first aspect.

Various embodiments of the second aspect may comprise at least one feature from the following bulleted list:
- The package comprises side seams in which an acidic dispersion adhesive has been used.
- The dispersion adhesive has a pH below or equal to 4.5.

According to a third aspect of the present invention, there is provided use of the package for holding acidic contents, such as acidic liquids, acidic flowable materials or acidic food, for example soda, citrus fruit juice, wine, yoghurt or crushed tomatoes.

Various embodiments of the third aspect may comprise at least one feature from the following bulleted list:
- The acidic contents have a pH below or equal to 4.5.

By means of the present invention, it is possible to avoid migration of the filler while simultaneously maintaining good sealing and adhesion properties. In this way, the present invention increases versatility in the use of fillers in the manufacturing of food and liquid packages. In the food packaging industry, migration of fillers and any additives is undesired.

Paperboard material having the structure according to the present invention can be used in applications in which incorporation of inorganic fillers and/or pigments into the structure is required.

By adding to the paperboard the coating structure according to the present invention, it is possible to reduce or entirely avoid the migration of filler components or molecules.

The paperboard structure according to the present invention can be used in packages intended for long-term storage of liquid of fluid materials.

At least some embodiments of the present invention improve the strength of side seams in paperboard packages.

The coated paperboard according to some embodiments of the invention can be used for manufacturing a package for such contents that are not chemically compatible with the inorganic filler material of the filler layer in the coating.

### BRIEF DESCRIPTION OF THE DRAWINGS

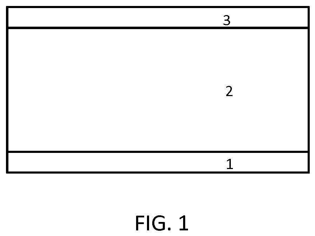

FIGURE 1 illustrates schematically a paperboard structure in accordance with at least some embodiments of the present invention.

### EMBODIMENTS

### DEFINITIONS

In the present context, the term "acid-sensitive" refers to materials or compounds that are susceptible of reacting with or being attacked by acidic compounds.

In the present context, the term "polyolefin" refers to an unmodified polyolefin. For example, the term "polyethylene" refers to an unmodified polyethylene.

We have unexpectedly observed that particular inorganic fillers with relatively high loadings can be incorporated in layered paperboard structures without sacrificing good sealing properties.

Particularly, we have found a new paperboard structure comprising acid-sensitive inorganic fillers and/or acid-sensitive pigments. The structure according to the invention provides good sealing properties and simultaneously reduces or avoids migration of filler particles onto the outermost surface of the structure (i.e. the top surface).

In the present paperboard structure, acid-sensitive pigments may be incorporated in the filler layer which is located below the plastic coating layer.

Other acid-sensitive materials or additives that may be added in the filler layer include any carbonate salt.

Some embodiments of the present invention provide the advantage that the acid-sensitive material does not migrate on the outermost surface of the paperboard structure and thus into contact with the ambient environment or with the contents of the package.

In preferred embodiments, an acid-sensitive filler and a polyolefin are used in the filler layer, and by means of applying a plastic coating layer comprising or consisting of a polyolefin on top of the filler layer it is possible to effectively prevent any contact between the filler and acidic contents of the package.

We have observed that the incorporation of acid-sensitive materials in accordance with some embodiments of the present invention does not negatively affect the heat-sealing properties, particularly during cup forming.

At least some embodiments of the present invention improve the strength of side seams in paperboard packages. In such seams, aqueous dispersion adhesives are typically used. These adhesives may be acidic, which makes the seam sensitive to alkaline fillers in the paperboard material.

FIGURE 1 illustrates a paperboard structure in accordance with at least some embodiments of the present invention.

The structure comprises a support layer 1, a filler layer 2, and a plastic coating layer 3, as a cascade.

The lowermost layer, i.e. the support layer, is made of a paperboard material. The fibre matrix of the paperboard material may comprise bleached or unbleached hardwood pulp, bleached or unbleached softwood pulp, bleached or unbleached mechanical pulp, bleached or unbleached chemi-mechanical pulp or recirculated broke pulp used in paperboard production, or mixtures thereof. In particular, mutual mixtures of the above described bleached and unbleached pulps, respectively, and mechanical or chemi-mechanical pulps, are possible. Recirculated broke pulp may also be used in any of the abovementioned pulps, mechanical pulps and chemi-mechanical pulps.

In some embodiments, paperboard is a single-ply or multi-ply paperboard material. In one embodiment, paperboard has a grammage of at least 150 g/m².

In preferred embodiments, the paperboard structure is folding boxboard.

The middle layer, i.e. the filler layer, comprises an inorganic filler, preferably an alkaline inorganic filler or an acid-sensitive inorganic filler.

Examples of alkaline or acid-sensitive fillers include: calcium carbonate, ground calcium carbonate (GCC), precipitated calcium carbonate (PCC), and other carbonate fillers.

In some embodiments, the inorganic filler is calcium carbonate, ground calcium carbonate, precipitated calcium carbonate or kaolin.

The filler layer may also comprise pigments, such as acid-sensitive pigments. Examples of acid-sensitive pigments include carbonate pigments.

The filler layer is in direct contact with and placed directly on top of the support layer. The filler layer is preferably homogeneous in the sense that the filler is distributed throughout the filler layer, across its entire thickness.

In a preferred embodiment, the filler layer comprises or consists of a mixture of an alkaline inorganic filler and a polyolefin.

In one embodiment, the filler layer comprises or consists of a mixture of a carbonate-containing filler and a polyolefin in the form of microparticles or nanoparticles.

The filler may be in the form of particles, for example particles with an average size in the range of 0.01 to 3 µm, for example 0.5 to 2 µm. Advantageously, the average size of the filler particles is in the range 1 to 2 µm. If the average particle size is larger than 5 µm, the structure of the above-lying plastic coating layer may weaken.

In one embodiment, the thickness of the filler layer is 5 to 100 µm, preferably 5 to 50 µm.

In the present invention, the amount of inorganic filler in the filler layer is at least 20 wt-%.

The plastic coating layer forms the topmost layer of the structure. Advantageously, the plastic coating layer is not in direct contact with the support layer.

In one embodiment, the plastic coating layer comprises or consists of polyolefin, such as polyethylene.

In the present invention, the plastic coating layer does not contain any inorganic filler.

In one embodiment, the thickness of the plastic coating layer is 5 to 8 µm.

In one embodiment, the combined dosage produced by the filler layer and the plastic coating layer is 12 to 40 g per m² of the support layer, preferably 12 to 30 g per m² of the support layer.

In a preferred embodiment, the paperboard structure consists of the following three layers: the support layer, the filler layer, and the plastic coating layer in this order.

The filler layer and the plastic coating layer are preferably applied by an extrusion coating method, for example co-extrusion coating, on the support layer.

The paperboard structure can be used for manufacturing packages for food industry. The package according to the invention may be for example a paper cup for acidic beverages or a package for yoghurt.

The package is particularly advantageous in holding acidic contents, such as acidic liquids, acidic flowable materials or acidic food. Examples of acidic contents include: acidic beverages, soda, citrus fruit juice, wine, yoghurt, crushed tomatoes. In one embodiment, the pH of the acidic contents is below 4.5.

The paperboard structure according to the invention is advantageous in paperboard packages comprising acidic materials, such as acidic adhesives. In one embodiment, the pH of an adhesive in a seam of the paperboard package is below 4.5.

The entire package or only a part of it may be formed of a paperboard material that comprises the paperboard structure according to the present invention. Preferably, all parts of the package that are in contact with the contents of the package are made of a paperboard material that has the paperboard structure according to the present invention.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### INDUSTRIAL APPLICABILITY

The present invention is industrially applicable for example in the manufacturing of paperboard packages for food industry.

### ACRONYMS LIST

- FCM: Food Contact Material

### REFERENCE SIGNS LIST

- 1: support layer
- 2: filler layer
- 3: plastic coating layer

### CITATION LIST

### Patent Literature

WO 2017/091391 A1

## Claims

1. A paperboard structure, comprising:
- a support layer comprising paperboard;
- a filler layer on top of and in direct contact with the support layer, the filler layer comprising an inorganic filler and a polyolefin; and
- a plastic coating layer on top of the filler layer and forming the outermost layer of the paperboard structure, the plastic coating layer comprising a polyolefin,
wherein:
the support layer is made of a paperboard material,
the support layer is the lowermost layer of the paperboard structure,
the amount of the inorganic filler in the filler layer is at least 20 wt-%,
the plastic coating layer does not contain any inorganic filler, and
the paperboard structure is configured for use in manufacturing packages for food industry for holding acidic liquids or acidic flowable materials.

2. The paperboard structure according to claim 1, wherein the inorganic filler is in the form of particles, such as microparticles or nanoparticles.

3. The paperboard structure according to claim 1, wherein the inorganic filler is in the form of microparticles.

4. The paperboard structure according to any of the preceding claims, wherein the inorganic filler is an acid-sensitive inorganic filler, preferably a carbonate-containing filler, for example CaCO₃.

5. The paperboard structure according to any of the preceding claims, wherein the polyolefin comprises polyethylene.

6. The paperboard structure according to any of the preceding claims, wherein the plastic coating layer consists of polyethylene.

7. The paperboard structure according to any of the preceding claims, wherein the thickness of the filler layer is 5 to 100 µm, preferably 5 to 50 µm.

8. The paperboard structure according to any of the preceding claims, wherein the thickness of the plastic coating layer is 5 to 50 µm, preferably 10 to 30 µm.

9. The paperboard structure according to any of the preceding claims, wherein the combined dosage produced by the filler layer and the plastic coating layer is 12 to 40 g per m² of the support layer, preferably 12 to 30 g per m² of the support layer.

10. The paperboard structure according to any of the preceding claims, obtained by an extrusion coating method.

11. A package comprising the paperboard structure according to any of the preceding claims.

12. The package according to claim 11, comprising side seams in which an acidic dispersion adhesive has been used.

13. The package according to claim 12, wherein the dispersion adhesive has a pH below or equal to 4.5.

14. Use of the package according to any of claims 11 to 13 for holding acidic liquids or acidic flowable materials.

15. The use according to claim 14, wherein the acidic contents have a pH below or equal to 4.5.

## Patentansprüche

1. Kartonstruktur, umfassend:
- eine Trägerschicht, die Karton umfasst;
- eine Füllschicht oben auf und in direktem Kontakt mit der Trägerschicht, wobei die Füllschicht einen anorganischen Füllstoff und ein Polyolefin umfasst; und
- eine Kunststoff-Überzugsschicht oben auf der Füllschicht und die äußerste Schicht der Kartonstruktur bildend, wobei die Kunststoff-Überzugsschicht ein Polyolefin umfasst,
wobei:
die Trägerschicht aus einem Kartonmaterial hergestellt ist,
die Trägerschicht die unterste Schicht der Kartonstruktur ist,
die Menge des anorganischen Füllstoffs in der Füllschicht mindestens 20 Gew.-% beträgt,
die Kunststoff-Überzugsschicht keine anorganischen Füllstoffe enthält und
die Kartonstruktur zur Verwendung bei der Herstellung von Verpackungen für die Nahrungsmittelindustrie zum Aufnehmen von säurehaltigen Flüssigkeiten oder säurehaltigen fließfähigen Materialien konfiguriert ist.

2. Kartonstruktur nach Anspruch 1, wobei der anorganische Füllstoff in Form von Partikeln, wie beispielsweise Mikropartikeln oder Nanopartikeln, vorliegt.

3. Kartonstruktur nach Anspruch 1, wobei der anorganische Füllstoff in Form von Mikropartikeln vorliegt.

4. Kartonstruktur nach einem der vorstehenden Ansprüche, wobei der anorganische Füllstoff ein säureempfindlicher anorganischer Füllstoff, vorzugsweise einen carbonathaltiger Füllstoff, beispielsweise CaCO₃, ist.

5. Kartonstruktur nach einem der vorstehenden Ansprüche, wobei das Polyolefin Polyethylen umfasst.

6. Kartonstruktur nach einem der vorstehenden Ansprüche, wobei die Kunststoff-Überzugsschicht aus Polyethylen besteht.

7. Kartonstruktur nach einem der vorstehenden Ansprüche, wobei die Dicke der Füllschicht 5 bis 100 µm, vorzugsweise 5 bis 50 µm, beträgt.

8. Kartonstruktur nach einem der vorstehenden Ansprüche, wobei die Dicke der Kunststoff-Überzugsschicht 5 bis 50 µm, vorzugsweise 10 bis 30 µm, beträgt.

9. Kartonstruktur nach einem der vorstehenden Ansprüche, wobei die kombinierte Dosierung, die durch die Füllschicht und die Kunststoff-Überzugsschicht erzeugt wird, 12 bis 40 g pro m² der Trägerschicht, vorzugsweise 12 bis 30 g pro m² der Trägerschicht, beträgt.

10. Kartonstruktur nach einem der vorstehenden Ansprüche, erhalten durch ein Extrusionsüberzugsverfahren.

11. Verpackung, umfassend die Kartonstruktur nach einem der vorstehenden Ansprüche.

12. Verpackung nach Anspruch 11, die Seitennähte umfasst, in denen ein säurehaltiger Dispersionsklebstoff verwendet worden ist.

13. Verpackung nach Anspruch 12, wobei der Dispersionsklebstoff einen pH-Wert niedriger oder gleich 4,5 aufweist.

14. Verwendung der Verpackung nach einem der Ansprüche 11 bis 13 zum Aufnehmen von säurehaltigen Flüssigkeiten oder säurehaltigen fließfähigen Materialien.

15. Verwendung nach Anspruch 14, wobei der säurehaltige Inhalt einen pH-Wert niedriger oder gleich 4,5 aufweist.

## Revendications

1. Structure en carton, comprenant :
- une couche de support comprenant du carton ;
- une couche de charge placée au-dessus et en contact direct avec la couche de support, cette couche de charge comprenant une charge inorganique et une polyoléfine ; et
- une couche de revêtement plastique sur la couche de charge et formant la couche la plus externe de la structure en carton, la couche de revêtement plastique comprenant une polyoléfine,
dans laquelle :
la couche de support est constituée d'un matériau en carton,
la couche de support est la couche inférieure de la structure en carton,
la quantité de charge inorganique dans la couche de charge est d'au moins 20 % en poids,
la couche de revêtement plastique ne contient aucune charge inorganique, et
la structure en carton est conçue pour être utilisée dans la fabrication d'emballages destinés à l'industrie alimentaire pour contenir des liquides acides ou des matériaux liquides acides.

2. Structure en carton selon la revendication 1, dans laquelle la charge inorganique est sous forme de particules, telles que des microparticules ou des nanoparticules.

3. Structure en carton selon la revendication 1, dans laquelle la charge inorganique est sous forme de microparticules.

4. Structure en carton selon l'une quelconque des revendications précédentes, dans laquelle la charge inorganique est une charge inorganique sensible aux acides, de préférence une charge contenant du carbonate, par exemple CaCO₃.

5. Structure en carton selon l'une quelconque des revendications précédentes, dans laquelle la polyoléfine comprend du polyéthylène.

6. Structure en carton selon l'une quelconque des revendications précédentes, dans laquelle la couche de revêtement plastique est constituée de polyéthylène.

7. Structure en carton selon l'une quelconque des revendications précédentes, dans laquelle l'épaisseur de la couche de charge est de 5 à 100 µm, de préférence de 5 à 50 µm.

8. Structure en carton selon l'une quelconque des revendications précédentes, dans laquelle l'épaisseur de la couche de revêtement plastique est de 5 à 50 µm, de préférence de 10 à 30 µm.

9. Structure en carton selon l'une quelconque des revendications précédentes, dans laquelle le dosage combiné produit par la couche de charge et la couche de revêtement plastique est de 12 à 40 g par m² de la couche de support, de préférence de 12 à 30 g par m² de la couche de support.

10. Structure en carton selon l'une quelconque des revendications précédentes, obtenue par un procédé de revêtement par extrusion.

11. Emballage comprenant la structure en carton selon l'une quelconque des revendications précédentes.

12. Emballage selon la revendication 11, comprenant des coutures latérales dans lesquelles un adhésif à dispersion acide a été utilisé.

13. Emballage selon la revendication 12, dans lequel l'adhésif de dispersion présente un pH inférieur ou égal à 4,5.

14. Utilisation de l'emballage selon l'une quelconque des revendications 11 à 13 pour contenir des liquides acides ou des matériaux fluides acides.

15. Utilisation selon la revendication 14, dans laquelle les contenus acides présentent un pH inférieur ou égal à 4,5.
